(19) Europäisches Patentamt

European Patent Office

Office européen des brevets

(11) **EP 3 618 225 A1**

(12) # EUROPEAN PATENT APPLICATION
published in accordance with Art. 153(4) EPC

(43) Date of publication:
**04.03.2020 Bulletin 2020/10**

(21) Application number: **17907005.7**

(22) Date of filing: **24.04.2017**

(51) Int Cl.:
*H02J 50/12* (2016.01)     *H02J 50/05* (2016.01)
*H02J 50/10* (2016.01)

(86) International application number:
**PCT/JP2017/016197**

(87) International publication number:
**WO 2018/198167 (01.11.2018 Gazette 2018/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Mitsubishi Electric Engineering
Company, Limited
Chiyoda-ku
Tokyo 102-0073 (JP)**

(72) Inventors:
• **AKUZAWA, Yoshiyuki
  Tokyo 102-0073 (JP)**
• **ITO, Yuki
  Tokyo 102-0073 (JP)**

(74) Representative: **Hoffmann Eitle
Patent- und Rechtsanwälte PartmbB
Arabellastraße 30
81925 München (DE)**

(54) **RESONANT-TYPE POWER RECEPTION APPARATUS**

(57)     Disclosed is a resonance-type power reception device including a DC-DC converter (7) having an input terminal connected to a line (10), a switching circuit (5) for connecting or disconnecting a line (9) to which power is inputted to or from the line (10), and a switch control unit (6) for causing the switching circuit (5) to connect the line (9) to the line (10) after a voltage (**V1**) exceeds a threshold voltage (**Vin(th)**).

FIG. 1

EP 3 618 225 A1

## Description

### TECHNICAL FIELD

The present invention relates to a resonance-type power reception device that receives power having a high frequency.

### BACKGROUND ART

Conventionally, a wireless power transmission system that adjusts the resonant coupling impedance of a transmission and reception unit in accordance with fluctuation in the input impedance of a reception power supply has been known (for example, refer to Patent Literature 1). The wireless power transmission system disclosed in this Patent Literature 1 includes a resonant coupling impedance adjustment unit that adjusts the resonant coupling impedance on the basis of the waveform of at least one of a voltage or a current in an input unit of a transmitting antenna. This resonant coupling impedance adjustment unit can also deal with impedance fluctuation not only at a time of a stationary operation of the wireless power transmission system but also when the reception power supply starts.

### CITATION LIST

### PATENT LITERATURE

Patent Literature 1: Japanese Patent Application Laid-Open Publication No.: 2014-103778

### SUMMARY OF INVENTION

### TECHNICAL PROBLEM

However, the time required for the reception power supply to start is approximately several milliseconds to several tens of milliseconds. Therefore, an impedance matching operation performed by the resonant coupling impedance adjustment unit at the time that the reception power supply starts needs a resolution equal to or less than a millisecond (ms) unit. Therefore, a problem is that in the case of implementing an impedance matching operation at the time that the reception power supply starts, the circuit scale of the wireless power transmission system becomes large. Then, as the circuit scale becomes large, the power consumption increases and the cost increases.

The present invention is made in order to solve the above-mentioned problem, and it is therefore an object of the present invention to provide a resonance-type power reception device that makes it possible for a receive side to deal with impedance fluctuation at the time that the receive side starts.

### SOLUTION TO PROBLEM

A resonance-type power reception device according to the present invention includes: a DC-DC converter having an input terminal connected to a first line; a switching circuit for connecting or disconnecting a second line to which power is inputted to or from the first line; and a switch control unit for causing the switching circuit to connect the second line to the first line after a voltage in the power exceeds a threshold voltage set for an input voltage of the DC-DC converter.

### ADVANTAGEOUS EFFECTS OF INVENTION

According to the present invention, because the configuration is provided as above, the receive side can deal with impedance fluctuation at the time that the receive side starts.

### BRIEF DESCRIPTION OF DRAWINGS

FIG. 1 is a view showing an example of the configuration of a resonance-type power transmission system according to the first embodiment of the present invention;
FIG. 2 is a view showing a relation among the input impedance **Zin** of a transmitting antenna and parameters associated with the input impedance **Zin** in the first embodiment of the present invention;
FIG. 3 is a view showing an example of the characteristics of an input voltage **Vin** and an input current **Iin** at the time that a resonance-type power reception device according to the first embodiment of the present invention starts;
FIG. 4 is a view showing an example of the characteristics of the input impedance **Zin** of the transmitting antenna at the time that the resonance-type power reception device according to the first embodiment of the present invention starts;
FIG. 5 is a view showing an example of the configuration of a resonance-type power transmission system according to the second embodiment of the present invention;
FIG. 6 is a view showing an example of the input-output characteristics of a DC-DC converter in the second embodiment of the present invention; and
FIGS. 7A and 7B are diagrams showing examples of the hardware configuration of a switch control unit in the first embodiment of the present invention.

### DESCRIPTION OF EMBODIMENTS

Hereafter, the preferred embodiments of the present invention will be explained in detail with reference to the drawings.

First Embodiment.

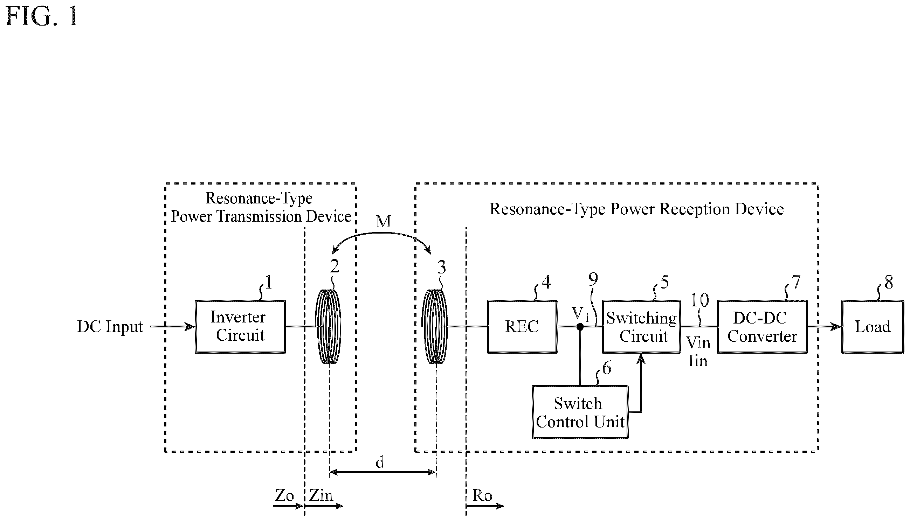

FIG. 1 is a view showing an example of the configuration of a resonance-type power transmission system (wireless power transmission system) according to the first embodiment of the present invention.

The resonance-type power transmission system includes an inverter circuit 1, a transmitting antenna (TX-ANT) 2, a receiving antenna (RX-ANT) 3, a rectifier circuit (REC) 4, a switching circuit 5, a switch control unit 6, a DC-DC converter 7, and a load 8, as shown in FIG. 1. Further, the inverter circuit 1 and the transmitting antenna 2 constitute a resonance-type power transmission device, and the receiving antenna 3, the rectifier circuit 4, the switching circuit 5, the switch control unit 6, and the DC-DC converter 7 constitute a resonance-type power reception device.

The inverter circuit 1 converts direct current power inputted thereto into high-frequency power (alternating current power) having a frequency that is the same (including a meaning of "substantially the same") as a resonance frequency that the transmitting antenna 2 has. This inverter circuit 1 is one of resonant switching type (DC/AC inverter circuit) such as a class E inverter circuit.

The transmitting antenna 2 resonates at a frequency that is the same (including a meaning of "substantially the same") as the frequency that the high-frequency power outputted by the inverter circuit 1 has, thereby performing power transmission.

The receiving antenna 3 resonates at a frequency that is the same (including a meaning of "substantially the same") as the resonance frequency that the transmitting antenna 2 has, thereby receiving the high-frequency power transmitted by the transmitting antenna 2. The high-frequency power (alternating current power) received by this receiving antenna 3 is outputted to the rectifier circuit 4.

A power transmission method used between the transmitting antenna 2 and the receiving antenna 3 is not particularly limited, and any of the following methods: a method using magnetic-field resonance, a method using electric-field resonance, and a method using electromagnetic induction can be used. Further, the transmitting antenna 2 and the receiving antenna 3 are not limited to antennas of non-contact type as shown in FIG. 1.

The rectifier circuit 4 converts the alternating current power outputted by the receiving antenna 3 into direct current power. The direct current power acquired by this rectifier circuit 4 is outputted to a line 9 (second line) connected to an output terminal.

The switching circuit 5 connects or disconnects the line 9 connected to the output terminal of the rectifier circuit 4 to or from a line 10 (first line) connected to an input terminal of the DC-DC converter 7, in accordance with control by the switch control unit 6. The switching circuit 5 is constituted by, for example, a field effect transistor (FET), a solid state relay (SSR), or a mechanical relay.

The switch control unit 6 controls the switching circuit 5. Here, it is assumed that at the time that the resonance-type power reception device starts, the switch control unit 6 is in a state of placing the switching circuit 5 in the off state to disconnect the lines 9 and 10 from each other. In contrast, after the voltage **V1** in the direct current power outputted to the line 9 by the rectifier circuit 4 exceeds a threshold voltage **Vin(th),** the switch control unit 6 switches on the switching circuit 5 to connect the lines 9 and 10. The threshold voltage **Vin(th)** is set for the input voltage **Vin** of the DC-DC converter 7, and is preset in accordance with the characteristics of the DC-DC converter 7. Further, in FIG. 1, the switch control unit 6 is configured so as to detect the voltage **V1** and, after the voltage **V1** exceeds the threshold voltage **Vin(th),** switch on the switching circuit 5.

The DC-DC converter 7 increases or decreases the voltage (input voltage) **Vin** in the direct current power inputted from the line 10 connected to the input terminal thereof. The direct current power acquired by this DC-DC converter 7 is outputted to the load 8.

The load 8 is a circuit or equipment that functions with the direct current power outputted by the DC-DC converter 7.

Next, the functions of the resonance-type power reception device in the first embodiment will be explained.

Here, the output impedance of the inverter circuit 1 is denoted by **Zo.** Further, the input impedance of the transmitting antenna 2 is denoted by **Zin.** Further, the input impedance of the rectifier circuit 4 is denoted by **Ro.** Further, the inductance of the transmitting antenna 2 is denoted by $L_{TX}$. Further, the inductance of the receiving antenna 3 is denoted by $L_{RX}$. Further, the mutual inductance between the transmitting antenna 2 and the receiving antenna 3 is denoted by **M.** Further, the distance between the transmitting antenna 2 and the receiving antenna 3 is denoted by **d.** Further, the input voltage of the DC-DC converter 7 is denoted by **Vin.** Further, the input current of the DC-DC converter 7 is denoted by **Iin.** When the switching circuit 5 is in the on-state, the voltage **V1** = the input voltage **Vin.**

Here, there arises a problem that when there is a large mismatch between the output impedance **Zo** of the inverter circuit 1 and the input impedance **Zin** of the transmitting antenna 2, the DC-DC converter 7 does not start. This problem is caused by the characteristics of the resonance-type wireless power transmission and the characteristics of the DC-DC converter 7.

The characteristics of the resonance-type wireless power transmission will be shown below.

The input impedance **Zin** of the transmitting antenna 2 is shown by the following equation (1). In the equation (1), $\omega=2\pi f$, and a character "**f**" denotes the transmission frequency.

$$Zin=(\omega M)^2/Ro \qquad (1)$$

Further, the input impedance **Ro** of the rectifier circuit 4 is shown by the following equation (2). In the equation (2), it is assumed that there is almost no loss in the rectifier circuit 4.

$$Ro \approx Vin/Iin \qquad (2)$$

Further, the mutual inductance **M** between the transmitting antenna 2 and the receiving antenna 3 is shown by the following equation (3). In the equation (3), a character "**K**" denotes the coefficient of coupling between the inductance $L_{TX}$ of the transmitting antenna 2 and the inductance $L_{RX}$ of the receiving antenna 3, and is in inverse proportion to the distance **d** between the transmitting antenna 2 and the receiving antenna 3. Therefore, the mutual inductance **M** varies as the distance **d** between the transmitting antenna 2 and the receiving antenna 3 varies.

$$M=K\sqrt{(L_{TX}L_{RX})} \qquad (3)$$

Then, using the equations (1) to (3), the input impedance **Zin** of the transmitting antenna 2 is given by the following equation (4).

$$Zin \approx (\omega M)^2/(Vin/Iin)$$
$$= ((\omega M)^2 Iin)/Vin \qquad (4)$$

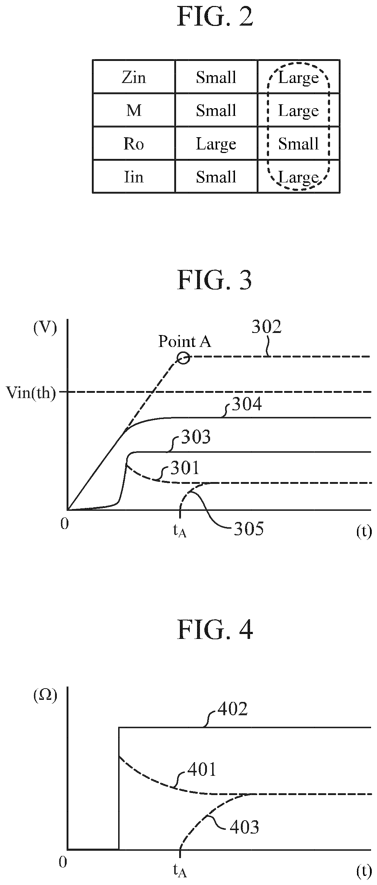

A relation among the parameters (**Zin**, **M**, **Ro**, **Iin**) shown by the equations (1) to (4) is shown in FIG. 2. FIG. 2 shows a case in which a conventional resonance-type power transmission system has an impedance matching function is used (this case corresponds to a state in which the switching circuit 5 is in an on-state at all times in the resonance-type power transmission system according to the first embodiment).

As shown in FIG. 2, at the time that the resonance-type power reception device starts, the parameters are in a state enclosed by a dotted line (values on a right-hand side shown in FIG. 2) because of a reception criterion, such as the distance **d** between the transmitting antenna 2 and the receiving antenna 3 or a load state. More specifically, at the time that the resonance-type power reception device starts, the input impedance **Zin** is large, the mutual inductance **M** is large, the input impedance **Ro** is small, and the input current **Iin** is large. Therefore, in this case, a mismatch between the output impedance **Zo** and the input impedance **Zin** occurs.

In FIG. 2, values on a left-hand side show the parameters in a case in which the input impedance Zin is small because of the reception criterion. Further, at the center values of the values of the parameters shown in FIG. 2, there occurs a state in which there is a match between the input impedance Zin and the output impedance **Zo.**

Next, an example of the characteristics of the input voltage **Vin** and the input current **Iin** of the DC-DC converter 7 and an example of the characteristics of the input impedance **Zin** of the transmitting antenna 2 at the time that the resonance-type power reception device starts are shown in FIGS. 3 and 4.

As shown in FIGS. 3 and 4, in the conventional resonance-type power transmission system that does not have an impedance matching function, the input current **Iin** and the input impedance **Zin** rise abruptly at the time that the resonance-type power reception device starts. Here, when the reception criterion satisfies a certain condition, the input current **Iin** (reference numeral 301) and the input impedance **Zin** (reference numeral 401) decrease gradually after that, and the input impedance **Zin** matches the output impedance **Zo**. Further, the input voltage **Vin** (reference numeral 302) exceeds the threshold voltage **Vin(th).** Therefore, in this case, the DC-DC converter 7 starts.

In contrast, when the reception criterion does not satisfy the above-mentioned condition, the input current **Iin** (reference numeral 303) and the input impedance **Zin** (reference numeral 402) do not drop, and the input impedance **Zin** has a mismatch with the output impedance **Zo**. Further, the input voltage **Vin** (reference numeral 304) cannot exceed the threshold voltage **Vin(th).** Therefore, in this case, the DC-DC converter 7 does not start.

As mentioned above, in the conventional resonance-type power transmission system, only when the reception criterion satisfies a certain condition, the DC-DC converter 7 can be started, whereas when another condition is satisfied, the DC-DC converter 7 cannot be started.

Further, even when the reception criterion satisfies a certain condition, the input impedance **Zin** rises temporarily and abruptly, and, after exceeding the output impedance **Zo**, decreases and its value converges to the value of the output impedance **Zo**. Therefore, the start of the resonance-type power reception device becomes unstable, and this instability is unpreferable in terms of performance.

Therefore, in the resonance-type power reception device according to the first embodiment, after the voltage **V1** exceeds the threshold voltage **Vin(th),** the switch control unit 6 switches the switching circuit 5 to the on-state, and the switching circuit 5 connects the lines 9 and 10. In FIGS. 3 and 4, a case in which the switch control unit 6 switches the switching circuit 5 to the on-state at a point **A** (time $t_A$) at which the input voltage **Vin** sufficiently exceeds the threshold voltage **Vin(th)** and becomes fixed (steady state) is shown.

As a result, the input current **Iin** (reference numeral 305) and the input impedance $Zin$ (reference numeral 403) can be made to gradually shift from small values to large values regardless of the reception criterion. By gradually raising the input impedance $Zin$ in this way, it becomes possible to surely make the input impedance $Zin$ converge to the same value as the output impedance $Zo$ (to provide characteristics $Zo \approx Zin$). Further, the DC-DC converter 7 starts at the time of $Zo \approx Zin$ or when the input impedance gets close to the state $Zo \approx Zin$.

Further, in the resonance-type power reception device, only by connecting the rectifier circuit 4 and the DC-DC converter 7 after the voltage $V1$ exceeds the threshold voltage $Vin(th)$, the impedance matching at the time that the resonance-type power reception device starts can be implemented. Therefore, the impedance matching can be implemented using the simple circuit, and downsizing, weight reduction, low power consumption, and cost reduction of the resonance-type power transmission system can be achieved.

Although the switch control unit 6 can switch the switching circuit 5 to the on-state immediately after the voltage $V1$ exceeds the threshold voltage $Vin(th)$, the DC-DC converter 7 does not start in some cases. Therefore, it is more desirable that the switch control unit 6 switches the switching circuit 5 to the on-state after the voltage $V1$ sufficiently exceeds the threshold voltage $Vin(th)$.

Further, in the above explanation, the case in which the switch control unit 6 directly detects the voltage $V1$ and, after the voltage $V1$ exceeds the threshold voltage $Vin(th)$, switches on the switching circuit 5 is shown. However, this embodiment is not limited to this example, and the switch control unit 6 can be configured so as to switch on the switching circuit 5 after a lapse of a preset specified time. More specifically, because the rising waveform of the voltage $V1$ can be roughly grasped in advance, the time required for the voltage $V1$ to exceed the threshold voltage $Vin(th)$ can be roughly grasped. For example, when the time $t_A$ in FIGS. 3 and 4 is 5ms, the specified time is set to approximately 10ms in consideration of an error.

As mentioned above, according to the first embodiment, because the DC-DC converter 7 having an input terminal connected to the line 10, the switching circuit 5 for connecting or disconnecting the line 9 to which power is inputted to or from the line 10, and the switch control unit 6 for causing the switching circuit 5 to connect the line 9 to the line 10 after the voltage $V1$ exceeds the threshold voltage $Vin(th)$ are included, the receive side can deal with impedance fluctuation at the time that the receive side starts, and stable start of the resonance-type power reception device can be implemented. Further, downsizing, weight reduction, low power consumption, and cost reduction of the resonance-type power transmission system can be achieved.

Further, because the impedance matching at the time that the resonance-type power reception device starts can be implemented only by the resonance-type power reception device, stable start of the resonance-type power reception device can be implemented even in power transmission, at the above-mentioned start time, between the resonance-type power reception device and the resonance-type power transmission device that does not have an impedance matching function.

Second Embodiment.

In the first embodiment, the case in which the impedance matching at the time that the resonance-type power reception device starts is performed by switching the connection between the line 9 connected to the output terminal of the rectifier circuit 4 and the line 10 connected to the input terminal of the DC-DC converter 7 by using the switching circuit 5 is shown. In contrast to that, in the second embodiment, a case in which impedance matching at the time that a resonance-type power reception device starts is performed by controlling the timing at which to start a DC-DC converter 7b is shown.

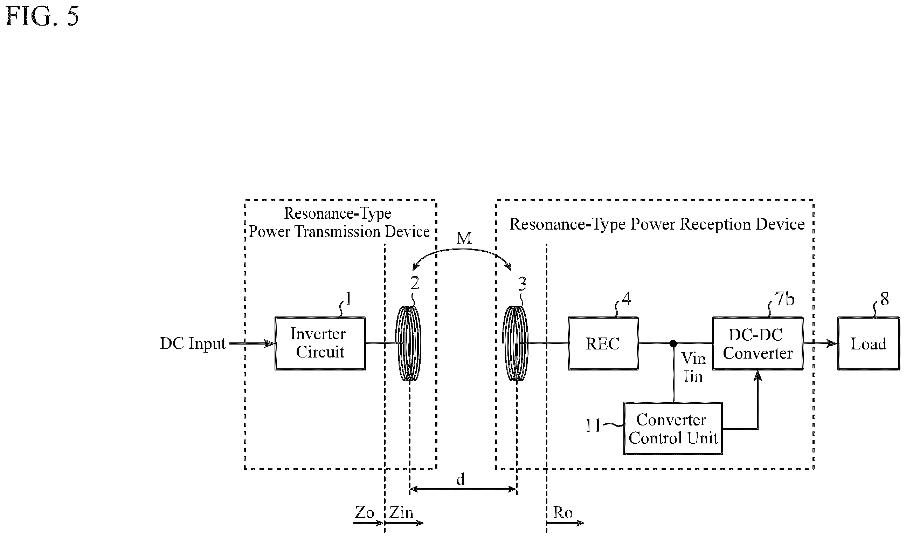

FIG. 5 is a view showing an example of the configuration of a resonance-type power transmission system according to the second embodiment of the present invention. In the resonance-type power transmission system according to the second embodiment shown in this FIG. 5, the switching circuit 5 and the switch control unit 6 are removed from the resonance-type power transmission system according to the first embodiment shown in FIG. 1, the DC-DC converter 7 is changed to the DC-DC converter 7b in the resonance-type power transmission system according to the first embodiment, and a converter control unit 11 is added to the resonance-type power transmission system according to the first embodiment. Further, the DC-DC converter 7b is connected directly to a rectifier circuit 4. The other components are the same as those according to the first embodiment, and are denoted by the same reference numerals and an explanation of the components will be omitted hereafter.

The DC-DC converter 7b increases or decreases a voltage (input voltage) $Vin$ in direct current power outputted by the rectifier circuit 4. Further, the DC-DC converter 7b has a function of performing soft start when starting. The direct current power acquired by this DC-DC converter 7b is outputted to a load 8.

The converter control unit 11 controls the timing at which to start the DC-DC converter 7b. Here, the converter control unit 11 causes the DC-DC converter 7b to remain stopped at the time that the resonance-type power reception device starts. In contrast, the converter control unit 11 starts the DC-DC converter 7b after the input voltage $Vin$ exceeds a threshold voltage $Vin(th)$. Further, in FIG. 5, the converter control unit 11 is configured so as to detect the input voltage $Vin$, and, after the input voltage $Vin$ exceeds the threshold voltage $Vin(th)$, start the DC-DC converter 7b.

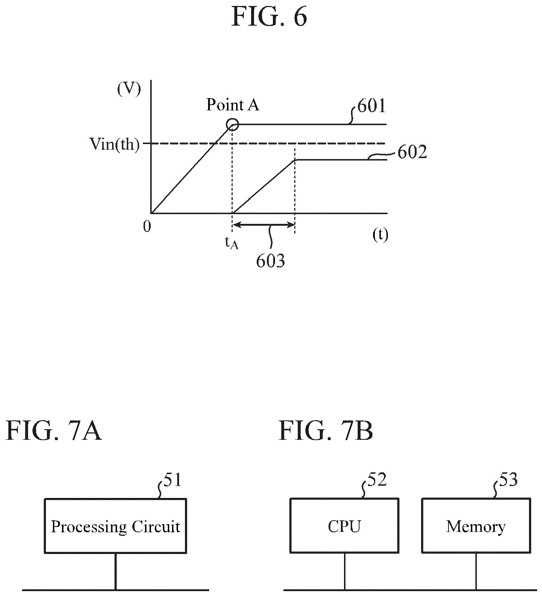

FIG. 6 is a view showing an example of the input-output characteristics of the DC-DC converter 7b. In FIG. 6, reference numeral "601" denotes the input voltage **Vin**, and reference numeral "602" denotes the output voltage **Vout** of the DC-DC converter 7b.

As shown in FIG. 6, in the resonance-type power reception device according to the second embodiment, the converter control unit 11 starts the DC-DC converter 7b after the input voltage **Vin** exceeds the threshold voltage **Vin(th).** Then, the DC-DC converter 7b starts the soft start. In FIG. 6, the case in which the converter control unit 11 starts the DC-DC converter 7b at a point **A** (time $t_A$) at which the input voltage **Vin** sufficiently exceeds the threshold voltage **Vin(th)** and becomes fixed (steady state) is shown.

As a result, an input current **Iin** (reference numeral 305) and an input impedance **Zin** (reference numeral 403) can be made to gradually shift from small values to large values regardless of a reception criterion, as shown in FIGS. 3 and 4, like those in the first embodiment. By gradually raising the input impedance **Zin** in this way, it becomes possible to surely make the input impedance **Zin** converge to the same value as an output impedance **Zo** (to provide characteristics **Zo≈Zin**). Further, the DC-DC converter 7b starts at the time of **Zo≈Zin** or when the input impedance gets close to the state **Zo≈Zin.**

A time period (reference numeral 603 shown in FIG. 6) during which the DC-DC converter 7b performs the soft start is preset to a value that makes it possible for the input impedance **Zin** to draw a locus as shown by the reference numeral 403 shown in FIG. 4.

Further, in the resonance-type power reception device, only by starting the DC-DC converter 7b after the input voltage **Vin** exceeds the threshold voltage **Vin(th),** the impedance matching at the time that the resonance-type power reception device starts can be implemented. Therefore, the impedance matching can be implemented using the simple circuit, and downsizing, weight reduction, low power consumption, and cost reduction of the resonance-type power transmission system can be achieved.

Although the converter control unit 11 can start the DC-DC converter 7b immediately after the input voltage **Vin** exceeds the threshold voltage **Vin(th),** the DC-DC converter 7b does not start in some cases. Therefore, it is more desirable that the converter control unit 11 starts the DC-DC converter 7b after the input voltage **Vin** sufficiently exceeds the threshold voltage **Vin(th).**

Further, in the case in which the converter control unit 11 starts the DC-DC converter 7b after the input voltage **Vin** sufficiently exceeds the threshold voltage **Vin(th),** the DC-DC converter 7b does not have to perform the soft start. Therefore, in this case, the DC-DC converter 7b that does not have the soft start function can be used.

Further, in the above explanation, the case in which the converter control unit 11 directly detects the input voltage **Vin** and, after the input voltage **Vin** exceeds the threshold voltage **Vin(th),** starts the DC-DC converter 7b is shown. However, this embodiment is not limited to this example, and the converter control unit 11 can be configured so as to start the DC-DC converter 7b after a lapse of a preset specified time, like the switch control unit 6 in the first embodiment.

As mentioned above, according to the second embodiment, even in the case in which the DC-DC converter 7b to which power is inputted, and the converter control unit 11 for starting the DC-DC converter 7b after the input voltage **Vin** exceeds the threshold voltage **Vin(th)** are included, the same advantages as those of the first embodiment can be provided.

Finally, an example of the hardware configuration of the switch control unit 6 in the first embodiment will be explained by referring to FIG. 7. An example of the hardware configuration of the converter control unit 11 in the second embodiment is the same as that of the switch control unit.

The function of the switch control unit 6 is implemented by a processing circuit 51. The processing circuit 51 can be hardware for exclusive use, as shown in FIG. 7A, or a CPU (Central Processing Unit, which is also referred to as a processing device, an arithmetic device, a microprocessor, a microcomputer, a processor, or a DSP (Digital Signal Processor) 52 that executes a program stored in a memory 53, as shown in FIG. 7B.

In the case in which the processing circuit 51 is hardware for exclusive use, the processing circuit 51 is, for example, a single circuit, a composite circuit, a programmable processor, a parallel programmable processor, an ASIC (Application Specific Integrated Circuit), an FPGA (Field Programmable Gate Array), or a combination of these circuits.

In the case in which the processing circuit 51 is the CPU 52, the function of the switch control unit 6 is implemented by software, firmware, or a combination of software and firmware. Software and firmware are described as programs and the programs are stored in the memory 53. The processing circuit 51 implements the function by reading and executing the programs stored in the memory 53. Further, it can also be said that these programs cause a computer to perform a procedure or a method which the switch control unit 6 uses. Here, the memory 53 is, for example, a non-volatile or volatile semiconductor memory, such as a RAM (Random Access Memory), a ROM (Read Only Memory), a flash memory, an EPROM (Erasable Programmable ROM), or an EEPROM (Electrically EPROM), a magnetic disk, a flexible disk, an optical disk, a compact disk, a mini disk, a DVD (Digital Versatile Disc), or the like.

A part of the function of the switch control unit 6 can be implemented by hardware for exclusive use, and a part of the function can be implemented by software or firmware.

In this way, the processing circuit 51 can implement the above-mentioned function by using hardware, software, firmware, or a combination of hardware, software, and firmware.

While the invention has been described in its preferred embodiments, it is to be understood that an arbitrary combination of two or more of the above-mentioned embodiments can be made, various changes can be made in an arbitrary component according to any one of the above-mentioned embodiments, and an arbitrary component according to any one of the above-mentioned embodiments can be omitted within the scope of the invention.

INDUSTRIAL APPLICABILITY

The resonance-type power reception device according to the present invention makes it possible for the receive side to deal with impedance fluctuation at the time that the receive side starts, and is suitable for use as a resonance-type power reception device or the like that receives power having a high frequency.

REFERENCE SIGNS LIST

| | |
|---|---|
| 1: | inverter circuit, |
| 2: | transmitting antenna (TX-ANT), |
| 3: | receiving antenna (RX-ANT), |
| 4: | rectifier circuit (REC), |
| 5: | switching circuit, |
| 6: | switch control unit, |
| 7 and 7b: | DC-DC converter, |
| 8: | load, |
| 9: | line (second line), |
| 10: | line (first line), |
| 11: | converter control unit, |
| 51: | processing circuit, |
| 52: | CPU, and |
| 53: | memory. |

**Claims**

1.  A resonance-type power reception device comprising:

    a DC-DC converter having an input terminal connected to a first line;
    a switching circuit for connecting or disconnecting a second line to which power is inputted to or from the first line; and
    a switch control unit for causing the switching circuit to connect the second line to the first line after a voltage in the power exceeds a threshold voltage set for an input voltage of the DC-DC converter.

2.  The resonance-type power reception device according to claim 1, wherein the switch control unit causes the switching circuit to connect the second line to the first line after a lapse of a specified time.

3.  The resonance-type power reception device according to claim 1, wherein the switch control unit detects the voltage, and, after the voltage exceeds the threshold voltage, causes the switching circuit to connect the second line to the first line.

4.  The resonance-type power reception device according to claim 1, wherein the switching circuit includes one of a field effect transistor, a solid state relay, and a mechanical relay.

5.  The resonance-type power reception device according to claim 1, further comprising:

    a receiving antenna for receiving alternating current power by using magnetic-field resonance, electric-field resonance, or electromagnetic induction, and
    a rectifier circuit for converting the alternating current power received by the receiving antenna into direct current power, and outputting the direct current power to the second line.

6.  A resonance-type power reception device comprising:

    a DC-DC converter to which power is inputted; and
    a converter control unit for starting the DC-DC converter after a voltage in the power exceeds a threshold voltage set for an input voltage of the DC-DC converter.

7.  The resonance-type power reception device according to claim 6, wherein the converter control unit starts the DC-DC converter after a lapse of a specified time.

8.  The resonance-type power reception device according to claim 6, wherein the converter control unit detects the voltage, and, after the voltage exceeds the threshold voltage, starts the DC-DC converter.

9.  The resonance-type power reception device according to claim 6, wherein the DC-DC converter performs soft start when starting.

10. The resonance-type power reception device according to claim 6, further comprising:

    a receiving antenna for receiving alternating current power by using magnetic-field resonance, electric-field resonance, or electromagnetic induction, and
    a rectifier circuit for converting the alternating current power received by the receiving antenna into direct current power, and outputting the direct current power to the DC-DC converter.

FIG. 1

Resonance-Type Power Transmission Device

DC Input

Inverter Circuit — 1

Zo  Zin

2

M

d

3

Ro

Resonance-Type Power Reception Device

REC — 4

V1 — 9

Switching Circuit — 5

Switch Control Unit — 6

10  Vin Iin

DC-DC Converter — 7

Load — 8

# FIG. 2

| Zin | Small | Large |
|-----|-------|-------|
| M | Small | Large |
| Ro | Large | Small |
| Iin | Small | Large |

# FIG. 3

# FIG. 4

FIG. 5

DC Input →

Resonance-Type
Power Transmission Device

Inverter
Circuit ~1

M

2

3

Resonance-Type Power Reception Device

REC ~4

Vin
Iin

DC-DC
Converter ~7b

Load ~8

11~ Converter
Control Unit

d

Zo  Zin

Ro

EP 3 618 225 A1

## FIG. 6

## FIG. 7A

## FIG. 7B

## INTERNATIONAL SEARCH REPORT

| International application No. |
| --- |
| PCT/JP2017/016197 |

**A. CLASSIFICATION OF SUBJECT MATTER**
*H02J50/12(2016.01)i, H02J50/05(2016.01)i, H02J50/10(2016.01)i*

According to International Patent Classification (IPC) or to both national classification and IPC

**B. FIELDS SEARCHED**

Minimum documentation searched (classification system followed by classification symbols)
H02J50/12, H02J50/05, H02J50/10

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | WO 2010/035546 A1   (Murata Mfg. Co., Ltd.),<br>01 April 2010 (01.04.2010),<br>paragraphs [0024] to [0030]; fig. 2 to 3<br>& US 2011/0210620 A1<br>paragraphs [0033] to [0039]; fig. 2 to 3<br>& EP 2333932 A1          & CN 102165670 A | 1,3-5<br>2,6-10 |
| X<br>Y | JP 2013-215065 A   (IHI Corp.),<br>17 October 2013 (17.10.2013),<br>paragraphs [0017] to [0028]; fig. 1 to 2<br>(Family: none) | 6-8,10<br>1-5,9 |
| Y | WO 2016/151889 A1   (Mitsubishi Electric Corp.),<br>29 September 2016 (29.09.2016),<br>paragraph [0036]; fig. 3<br>(Family: none) | 9 |

☒   Further documents are listed in the continuation of Box C.        ☐   See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 May 2017 (15.05.17) | 23 May 2017 (23.05.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2017/016197 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2011-66985 A  (Toyota Motor Corp.), 31 March 2011 (31.03.2011), paragraphs [0045] to [0048]; fig. 4 (Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014103778 A